# EUROPEAN PATENT SPECIFICATION

(11) **EP 2 873 706 B1**
(45) Date of publication and mention of the grant of the patent: **22.07.2020**
(21) Application number: 13193494.5
(22) Date of filing: 19.11.2013
(51) Int. Cl.: C09J 7/10, B32B 5/32, B32B 7/06, B32B 7/12, B32B 25/04, B32B 27/06, B32B 27/28, B32B 27/30, B32B 27/32, B32B 27/36

(54) **Multilayer pressure-sensitive adhesive assembly**
Mehrschichtige druckempfindliche Haftmittelanordnung
Film adhésif multicouche sensible à la pression

(43) Date of publication of application: 20.05.2015
(73) Proprietor: 3M Innovative Properties Company, Saint Paul, MN 55133-3427 (US)
(72) Inventor: Kuester, Frank, 41453 Neuss (DE)
(74) Representative: Gabriel, Kiroubagaranne

(56) References cited:
- EP-A1- 2 573 149
- WO-A2-2013/019493
- US-A1- 2004 137 222

## Description

### Technical Field

The present disclosure relates generally to the field of adhesives, more specifically to the field of pressure sensitive adhesive (PSA) assemblies. The present disclosure also relates to a method of manufacturing such pressure sensitive adhesive assemblies and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adherend, and (4) sufficient cohesive strength. As applications for pressure-sensitive adhesives have increased substantially in recent years, performance requirements have become increasingly demanding.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate based copolymers, natural rubber, synthetic rubbers, and silicones.

When used as attachment devices for a variety of assembly and manufacturing applications, such as interior or exterior automotive mounting of panels and molding, or in the construction industry, pressure sensitive adhesives are required to provide good adhesion performance to rough or irregular surfaces. Under these circumstances, thicker conformable pressure sensitive adhesives, in particular pressure sensitive adhesive foams, generally outperform thin pressure sensitive adhesives (such as those having a caliper of less than 125 µm). In addition, many applications require pressure sensitive adhesives to support a load at elevated temperatures, typically in the range of from 70°C to 90°C, for which high cohesive strengths are required.

It is a recognized challenge in the adhesive tapes industry to provide thick pressure sensitive adhesives (i.e. having an overall caliper of at least 2000 µm), in particular clear thick pressure sensitive adhesives, using easy and efficient production processes. Common manufacturing methods, such as those involving hotmelt- or solvent-based techniques, do not often provide industrially viable solution for the production of thick pressure sensitive adhesives having acceptable characteristics.

Patent application US 2010/0055435-A1 discloses a self-adhesive tape comprising a laminate composed of at least two pressure sensitive adhesive layers laminated directly to one another, one or both of the surfaces to be laminated to one another of the PSA layers having been chemically and/or physically pretreated prior to lamination. The pretreatment step which is required does obviously introduce complexity and additional costs to the overall manufacturing method, and may strongly hamper the possibility to produce clear PSA assemblies. Patent application WO 2013/019493 A2 (Traser et al.) describes a multilayer pressure sensitive adhesive (PSA) film having adhesive properties at its first and second main surface, wherin the fim comprises at least two superimposed layers of a polymeric pressure sensitive adhesive foam material and optionally one or more intermediate layers of a polymeric foam material, whereas the PSA film is obtainable by a continuous self-metered process. Patent application EP 2 573 149 A1 (Traser et al.) describes multilayer pressure sensitive adhesive (PSA) films, having a first pressure sensitive adhesive layer and at least one opposing layer, wherein the first pressure sensitive adhesive layer comprises a pressure sensitive adhesive composition with a (meth)acrylic-based elastomeric material. Patent application US 2004/0137222 A1 (Welke et al.) describes a transparent pressure sensitive adhesive layer having high peel adhesion from polycarbonate surfaces, as well as advantageous humidity resistance and advantageous static shear performance.

Without contesting the technical advantages associated with the pressure sensitive adhesive assemblies known in the art, there is still a need for a stable and cost-effective pressure sensitive adhesive assembly having an overall calliper of at least 2000 µm and provided with excellent and versatile adhesion characteristics, in particular with respect to peel forces and shear resistance on various types of surfaces.

Other advantages of the multilayer pressure sensitive adhesive (PSA) assembly and methods of the invention will be apparent from the following description.

### Summary

According to one aspect, the present disclosure relates to a multilayer pressure sensitive adhesive (PSA) assembly having an overall calliper of at least 2000 µm and comprising a plurality of superimposed pressure sensitive adhesive (PSA) layers, wherein the PSA assembly comprises at least a first PSA layer comprising a first polymeric material comprising the reaction product of a first (co)polymerizable material comprising a carboxyl group-containing (co)monomer, wherein the PSA assembly further comprises at least a second PSA layer comprising a second polymeric material comprising the reaction product of a second (co)polymerizable material comprising a nitrogen-containing (co)monomer, wherein the plurality of superimposed PSA layers is arranged such that the first PSA layer(s) and the second PSA layer(s) are adjacently superimposed in a strictly alternating series, wherein the multilayer pressure sensitive adhesive assembly comprises at least two PSA layers having a caliper of at least 800 µm, and wherein the first and the second PSA layers are prepared separately and subsequently laminated to each other.

In another aspect, the present disclosure is directed to a method of manufacturing a multilayer pressure sensitive adhesive (PSA) assembly as above-described, comprising the steps of:
a) providing a plurality of pressure sensitive adhesive (PSA) layers, wherein the plurality of PSA layers comprises at least a first PSA layer comprising a first polymeric material comprising the reaction product of a first (co)polymerizable material comprising a carboxyl group-containing (co)monomer, and at least a second PSA layer comprising a second polymeric material comprising the reaction product of a second (co)polymerizable material comprising a nitrogen-containing (co)monomer, and wherein the multilayer pressure sensitive adhesive assembly comprises at least two PSA layers having a caliper of at least 800 µm; and
b) superimposing the plurality of PSA layers by lamination techniques according to an arrangement such that the first PSA layer(s) and the second PSA layer(s) are adjacently superimposed in a strictly alternating series.

In still another aspect, the present disclosure relates to the use of a multilayer pressure sensitive adhesive assembly as above-described for industrial applications, in particular for construction applications and automotive applications.

### Detailed description

According to a first aspect, the present disclosure relates to a multilayer pressure sensitive adhesive (PSA) assembly having an overall calliper of at least 2000 µm and comprising a plurality of superimposed pressure sensitive adhesive (PSA) layers, wherein the PSA assembly comprises at least a first PSA layer comprising a first polymeric material comprising the reaction product of a first (co)polymerizable material comprising a carboxyl group-containing (co)monomer, wherein the PSA assembly further comprises at least a second PSA layer comprising a second polymeric material comprising the reaction product of a second (co)polymerizable material comprising a nitrogen-containing (co)monomer, and wherein the plurality of superimposed PSA layers is arranged such that the first PSA layer(s) and the second PSA layer(s) are adjacently superimposed in a strictly alternating series, wherein the multilayer pressure sensitive adhesive assembly comprises at least two PSA layers having a caliper of at least 800 um, and wherein the first and the second PSA layers are prepared separately and subsequently laminated to each other.

In the context of the present disclosure, it has surprisingly been found that a multilayer PSA assembly comprising a plurality of superimposed pressure sensitive adhesive (PSA) layers as described above allows providing an overall caliper of at least 2000 µm, whilst providing high peel forces with high shear force resistance on various types of substrates.

Without wishing to be bound by theory, it is believed that the first polymeric material comprising the reaction product of a first (co)polymerizable material comprising a carboxyl group-containing (co)monomer and the second polymeric material comprising the reaction product of a second (co)polymerizable material comprising a nitrogen-containing (co)monomer, have a high polar affinity thereby providing suitable inter-layer adhesion between the first PSA layer(s) and the second PSA layer(s) which are adjacently superimposed. The inter-layer adhesion provided between the first PSA layer(s) and the second PSA layer(s) is sufficient to provide adequate bonding strength between the layer(s) without using primer compositions/layers or other chemical or physical surface pre-treatments, such as e.g. corona treatment, and without any delamination or inter-layer destruction occurring, in particular at the interfaces between the superimposed layers.

The properties of multilayer PSA assemblies according to the present disclosure may be varied broadly by varying, for example, the composition of the layers, the sequence of the layers in the multilayer PSA assembly or the respective thickness of the layers. Multilayer PSA assemblies according to the present disclosure can therefore be tailor-made for a broad variety of applications in different technical fields.

Advantageously, multilayer PSA assemblies comprising a plurality of superimposed pressure sensitive adhesive (PSA) layers as described above, allow providing an overall caliper of at least 2000 µm, at least 2500 µm, at least 3000 µm, at least 3500 µm or even at least 4000 µm while preventing any polymerization gradient or crosslinking gradient from occurring throughout the thickness of the multilayer PSA assembly according to the disclosure. Polymerization and/or crosslinking gradient may indeed frequently appear in monolayer pressure sensitive adhesives having an overall caliper of 1500 µm or above.

Advantageously still, the multilayer PSA assembly according to the present disclosure may be conveniently obtained by e.g. lamination of the corresponding single PSA layers using conventional lamination techniques and equipments, without having recourse to using chemical or physical surface pre-treatment to enhance adhesion between the PSA layers, thereby rendering possible the manufacture of clear multilayer PSA assemblies.

The multilayer PSA assemblies according to the present disclosure furthermore provide excellent resistance to delamination in particular at the interfaces between the laminated layers when subjected to peel and/or shear forces, especially at elevated temperatures.

In the beneficial aspect according to which the multilayer PSA assembly comprises a polymeric foam layer, properties/requirements of the overall assembly such as application issues, deforming issues and energy distribution may be advantageously addressed by appropriate formulation of this polymeric foam layer, while other properties such as adhesion (quick adhesion) can be adjusted by the formulation of other non-foam pressure sensitive adhesive layers (also commonly referred to as skin layers).

In particular, such advantageous properties may be obtained on substrates as diverse as low surface energy, medium surface energy and/or high surface energy substrates.

In the context of the present disclosure, the expression "low surface energy substrates" is meant to refer to those substrates having a surface energy of less than 0.034 Newton per meter (34 dynes per centimeter). Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 0.034 and 0.070 Newton per meter (34 and 70 dynes per centimeter), typically between 0.034 and 0.060 Newton per meter (34 and 60 dynes per centimeter), and more typically between 0.034 and 0.050 Newton per meter (34 and 50 dynes per centimeter). Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In the context of the present disclosure, the expression "high surface energy substrates" is meant to refer to those substrates having a surface energy of more than 0.35 Newton per meter (350 dynes per centimeter), typically more than 0.40 Newton per meter (400 dynes per centimeter), and more typically to those substrates having a surface energy comprised between 0.40 and 1.10 Newton per meter (400 and 1100 dynes per centimeter). Included among such materials are metal substrates (e.g. aluminum, stainless steel), and glass.

The surface energy is typically determined from contact angle measurements as described, for example, in ASTM D7490-08.

The multilayer pressure sensitive adhesive assembly according to the disclosure may find particular use for adhering e.g. automotive body side mouldings, weather strips, road signs, commercial signs, constructions, electrical cabinets, shell moulds, machine parts, junction boxes or backsheet solutions for photovoltaic modules. The multilayer pressure sensitive adhesive assembly according to the disclosure is particularly suited for bonding to low energy surfaces, such as polyolefin surfaces and clear coat surfaces. More particularly, the multilayer PSA assembly disclosed herein may be advantageously bonded to automotive clear coat surfaces.

The pressure sensitive adhesive assembly according to the present disclosure may have a design or configuration of any suitable kind, depending on its ultimate application and the desired properties, provided it has an overall calliper of at least 2000 µm; and provided it comprises a plurality of superimposed pressure sensitive adhesive (PSA) layers, wherein the PSA assembly comprises at least a first PSA layer comprising a first polymeric material comprising the reaction product of a first (co)polymerizable material comprising a carboxyl group-containing (co)monomer, and the PSA assembly further comprises at least a second PSA layer comprising a second polymeric material comprising the reaction product of a second (co)polymerizable material comprising a nitrogen-containing (co)monomer, wherein the plurality of superimposed PSA layers is arranged such that the first PSA layer(s) and the second PSA layer(s) are adjacently superimposed in a strictly alternating series, wherein the multilayer pressure sensitive adhesive assembly comprises at least two PSA layers having a caliper of at least 800 µm, and wherein the first and the second PSA layers are prepared separately and subsequently laminated to each other.

In a preferred aspect of the present disclosure, the multilayer pressure sensitive adhesive assembly has an overall caliper of at least 2500 µm, at least 3000 µm, at least 3500 µm, or even at least 4000 µm.

The first and/or the second polymeric material for use herein may comprise any polymer base material well known to those skilled in the art for being suitable to form PSA layers. As such, the polymer base material for use in the various layers of the multilayer pressure sensitive adhesive assemblies of the present disclosure is not particularly limited.

According to a particular aspect, the first and/or the second polymeric material for use herein comprises a polymer base material selected from the group consisting of polyacrylates, polyolefins, polyesters, polyethers, polyisobutylene, polystyrenes, polyvinyls, natural rubbers, synthetic rubbers, and any combinations, copolymers or mixtures thereof.

In a typical aspect, the first and/or the second polymeric material for use herein comprises a polymer base material selected from the group consisting of polyacrylates, and any combinations, copolymers or mixtures thereof.

According to a preferred aspect, the first and/or the second polymeric material for use herein comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

As used herein, the term "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R)-(CO)- where R is hydrogen or methyl.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl, .

The terms "glass transition temperature" and "Tg" are used interchangeably and refer to the glass transition temperature of a material or a mixture. Unless otherwise indicated, glass transition temperature values are determined by Differential Scanning Calorimetry (DSC).

According to a preferred aspect of the pressure sensitive adhesive assemblies of the present disclosure, the first and/or the second polymeric material for use herein comprises a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In a more preferred aspect, the linear or branched alkyl (meth)acrylate ester for use herein is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate (IOA), 2-ethylhexyl acrylate (2-EHA), 2-octyl acrylate (2-OA) and 2-propylheptyl acrylate (2-PHA).

According to an alternative aspect, the linear or branched alkyl (meth)acrylate ester for use herein is selected to comprise 2-octyl(meth)acrylate. Polymer base material derived from 2-octyl (meth)acrylate provides comparable adhesive properties when compared with other isomers of octyl (meth)acrylate, such as n-octyl and isooctyl. Further, the pressure sensitive adhesive compositions have lower inherent and solution viscosities when compared to adhesive compositions derived from other octyl isomers, such as isooctyl acrylate, at the same concentrations, and under the same polymerization conditions.

The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

It is however preferred that the 2-octyl(meth)acrylate monomer for use herein is at least partly, preferably completely (i.e. 100 wt%) derived from biological material, more preferably from a plant material. This may advantageously be used to provide adhesive films/tapes which are at least partly derived from "green" sources, which is ecologically more sustainable and also reduces the dependency on mineral oil and the price development.

In the context of the present disclosure, the term "derived from biological material" is meant to express that from a certain chemical ingredient, at least a part of its chemical structure comes from biological materials, preferably at least 50 wt% of its structure. This definition is in principle the same as for bio-diesel fuel, in which usually only the fatty acid part originates from biological sources whereas the methanol may also be derived from fossil material like coal or mineral oil.

In addition to the polymer base material, the first (co)polymerizable material used for producing the first PSA layer further comprises a carboxyl group-containing (co)monomer. In the context of the present disclosure, any carboxyl group-containing (co)monomer commonly known in the art may be used, and carboxyl group-containing (co)monomers for use in the first (co)polymerizable material are not particularly limited.

Suitable carboxyl group-containing (co)monomers for use herein will be easily identified by those skilled in the art in the light of the present description. Exemplary carboxyl group-containing (co)monomers (acidic (co)monomers) for use herein include, but are not limited to, (meth)acrylic acid, itaconic acid, fumaric acid, crotonic acid, citraconic acid, maleic acid, oleic acid, beta-carboxyethyl (meth)acrylate, and any combinations, mixtures or salts thereof. Any suitable salt of an acidic group can be used. In many aspects, the cation of the salt is an ion of an alkaline metal (e.g., sodium, potassium, or lithium ion), an ion of an alkaline earth (e.g., calcium, magnesium, or strontium ion), an ammonium ion, or an ammonium ion substituted with one or more alkyl or aryl groups.

In a particular aspect, the carboxyl group-containing (co)monomer for use herein is selected from the group consisting of acrylic acid, methacrylic acid, itaconic acid, and any combinations or mixtures thereof. In a more particular aspect, the carboxyl group-containing (co)monomer for use herein is selected from the group consisting of acrylic acid, methacrylic acid, and any combinations or mixtures thereof.

The carboxyl group-containing (co)monomers for use herein may be present in the first (co)polymerizable material used for producing the first PSA layer, in any suitable amounts. In some exemplary aspects, the carboxyl group-containing (co)monomers are present in amounts up to 20 weight percent, based on a total weight of the first polymerizable material used to produce the first PSA layer of the multilayer pressure sensitive adhesive assembly of the present disclosure. In some other exemplary aspects, this amount is typically of at least 3 weight percent or at least 5 weight percent, based on a total weight of the first polymerizable material.

Accordingly, in some exemplary aspects, the carboxyl group-containing (co)monomers can be present in an amount in a range of from 3 to 20 weight percent, from 5 to 15 weight percent, or even from 10 to 15 weight percent, based on a total weight of the first polymerizable material.

In a particularly typical aspect, the carboxyl group-containing (co)monomers are present in the first (co)polymerizable material used for producing the first PSA layer, in any effective amounts suitable to render the first PSA layer acidic in nature.

In addition to the polymer base material, the second (co)polymerizable material used for producing the first PSA layer further comprises a nitrogen-containing (co)monomer. In the context of the present disclosure, nitrogen-containing (co)monomer commonly known in the art may be used, and nitrogen-containing (co)monomers for use in the second (co)polymerizable material are not particularly limited. Suitable nitrogen-containing (co)monomers for use herein will be easily identified by those skilled in the art in the light of the present description. Exemplary nitrogen-containing (co)monomers for use herein include, but are not limited to, N-alkyl (meth)acrylamides such as N-methyl acrylamide, N-ethyl acrylamide, N-isopropyl acrylamide, tert-octyl acrylamide, or N-octyl acrylamide. Exemplary nitrogen-containing (co)monomers with a tertiary amido group include, but are not limited to, N-vinyl caprolactam, N-vinyl-2-pyrrolidone, acryloyl morpholine, and N,N-dialkyl acrylamides such as N,N-dimethyl acrylamide, N,N-diethyl acrylamide, N,N-dipropyl acrylamide, N,N-dibutyl acrylamide, and any combinations, mixtures or salts thereof. Any suitable salt of a nitrogen-containing group can be used as appropriate.

In a particular aspect, the nitrogen-containing (co)monomer for use herein is selected from the group consisting of acrylamides and substituted acrylamides, and any combinations, mixtures or salts thereof. In another particular aspect, the nitrogen-containing (co)monomer for use herein is selected from the group consisting of N-vinyl pyrrolidone, N-vinyl caprolactam, N,N-dialkylamino (meth)acrylates and any combinations, mixtures or salts thereof. More particularly, the nitrogen-containing (co)monomer for use herein is selected from the group consisting of N-vinyl-caprolactam, N-vinyl-2-pyrrolidone, acryloyl morpholine, and N,N-dialkyl acrylamides, and any combination, mixtures or salts thereof. In a more particular aspect, the nitrogen-containing (co)monomer for use herein is selected to be N-vinyl-caprolactam.

The nitrogen-containing (co)monomers for use herein may be present in the second (co)polymerizable material used for producing the second PSA layer, in any suitable amounts. In some exemplary aspects, the nitrogen-containing (co)monomers are present in amounts up to 40 weight percent, up to 30 weight percent, up to 20 weight percent, based on a total weight of the second polymerizable material used to produce the second PSA layer of the multilayer pressure sensitive adhesive assembly of the present disclosure. In some other exemplary aspects, this amount is typically of at least 5 weight percent, based on a total weight of the second polymerizable material.

Accordingly, in some exemplary aspects, the nitrogen-containing (co)monomers can be present in an amount in a range of from 5 to 40 weight percent, from 5 to 30 weight percent, from 5 to 20 weight percent, or even from 10 to 15 weight percent, based on a total weight of the second polymerizable material.

In a particularly typical aspect, the nitrogen-containing (co)monomers are present in the second (co)polymerizable material used for producing the second PSA layer, in any effective amounts suitable to render the second PSA layer basic in nature.

As will be apparent to those skilled in the art, the first and/or the second polymeric material may further comprise any other material commonly known for being suitable to form pressure sensitive adhesives and/or pressure sensitive adhesives layers.

Polymeric materials for use in pressure-sensitive adhesives may typically be prepared from one or more non-polar monomers plus various optional monomers such as one or more polar monomers. In particular, (meth)acrylic-based polymeric materials included in pressure-sensitive adhesives are typically prepared from one or more non-polar acrylate monomers with a relatively low glass transition temperature (Tg) (i.e., the Tg of a monomer is measured as a homopolymer prepared from the monomer) plus various optional monomers such as one or more polar monomers. The polar monomers are often selected to have an acidic group, a hydroxyl group, or a nitrogen-containing group. Some widely used non-polar acrylate monomers in conventional (meth)acrylic-based elastomeric materials are alkyl (meth)acrylates such as 2-ethylhexyl acrylate (2-EHA) and isooctyl acrylate (IOA).

According to a particular aspect of the pressure sensitive adhesive assemblies of the present disclosure, the first and/or the second polymeric material comprises a polymer base material further comprising a polar comonomer, in particular a polar acrylate, which may typically be selected from the group consisting of acrylic acid, methacrylic acid, itaconic acid, hydroxyalkyl acrylates, acrylamides and substituted acrylamides, acrylamines and substituted acrylamines and any combinations or mixtures thereof. Other useful polar comonomers include, but are not limited to, N-substituted acrylamides, acrylonitrile, methacrylonitrile, hydroxyalkyl acrylates, cyanoethyl acrylate, maleic anhydride, N-vinyl-2-pyrrolidone, N-vinyl-caprolactam and any combinations or mixtures thereof.

According to a typical aspect of the present disclosure, the first and/or the second polymeric material for use in the pressure sensitive adhesive assembly comprises a pressure sensitive adhesive composition comprising a reaction product of a polymerizable material comprising:
(a) a linear or branched alkyl (meth)acrylate ester as main monomer, wherein the main monomer is preferably selected from the group consisting of iso-octyl (meth)acrylate, 2-ethylhexyl (meth)acrylate, 2-propylheptyl (meth)acrylate, butyl acrylate; and optionally
(b) a second monomer having an ethylenically unsaturated group, preferably a reinforcing monoethylenically-unsaturated monomers which is copolymerizable with the acrylate main monomer.

In some exemplary aspects, the first and/or the second polymeric material comprises (at least one) second monomer having an ethylenically unsaturated group. Any suitable second monomer having an ethylenically unsaturated group may be used to prepare the polymerizable material used for producing the first pressure sensitive adhesive layer and/or the second pressure sensitive adhesive layer of the PSA assembly. Suitable second monomer having an ethylenically unsaturated group for use herein will be easily identified by those skilled in the art in the light of the present description.

Exemplary second monomers having an ethylenically unsaturated group for use herein include those selected from the group consisting of polar and non-polar alkyl (meth)acrylate esters, polar monomers, non-polar vinyl monomers, and any combinations or mixtures thereof.

According to a typical aspect, the second monomer having an ethylenically unsaturated group comprises an alkyl (meth)acrylate ester, preferably having an alkyl group comprising from 1 to 32, from 1 to 20, or even from 1 to 15 carbon atoms.

In a more typical aspect, the polymerizable material further comprises a second non-polar monomer having an ethylenically unsaturated group. Any non-polar monomer with an ethylenically unsaturated group can be used as the second monomer to prepare the polymerizable material used for producing the first pressure sensitive adhesive layer and/or the second pressure sensitive adhesive layer of the PSA assembly. Suitable non-polar monomers having an ethylenically unsaturated group for use herein will be easily identified by those skilled in the art in the light of the present description.

Suitable second non-polar monomers having an ethylenically unsaturated group include, but are not limited to, non-polar alkyl (meth)acrylate esters. In particular, the second monomer comprises a non-polar alkyl (meth)acrylate ester having an alkyl group comprising from 1 to 32, from 1 to 20, from 1 to 15, or even from 1 to 13 carbon atoms.

Particular non-polar alkyl (meth)acrylate esters with an alkyl group having from 1 to 30 carbon atoms for use herein include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, iso-pentyl (meth)acrylate (i.e., iso-amyl (meth)acrylate), 3-pentyl (meth)acrylate, 2-methyl-1-butyl (meth)acrylate, 3-methyl-1-butyl (meth)acrylate, stearyl (meth)acrylate, phenyl (meth)acrylate, n-hexyl (meth)acrylate, iso-hexyl (meth)acrylate, cyclohexyl (meth)acrylate, 2-methyl-1-pentyl (meth)acrylate, 3-methyl-1-pentyl (meth)acrylate, 4-methyl-2-pentyl (meth)acrylate, 2-ethyl-1-butyl (meth)acrylate, 2-methy-1-hexyl (meth)acrylate, 3,5,5-trimethyl-1-hexyl (meth)acrylate, cyclohexyl (meth)acrylate, 3-heptyl (meth)acrylate, benzyl (meth)acrylate, n-octyl (meth)acrylate, iso-octyl (meth)acrylate, 2-octyl (meth)acrylate, 2-ethyl-1-hexyl (meth)acrylate, n-decyl (meth)acrylate, iso-decyl (meth)acrylate, isobornyl (meth)acrylate, 2-propylheptyl (meth)acrylate, isononyl (meth)acrylate, isophoryl (meth)acrylate, n-dodecyl (meth)acrylate (i.e., lauryl (meth)acrylate), n-tridecyl (meth)acrylate, iso-tridecyl (meth)acrylate, 3,7-dimethyl-octyl (meth)acrylate, and any combinations or mixtures thereof.

Other suitable alkyl (meth)acrylate esters for use herein include those with an alkyl group having at least 14 carbon atoms but that are linear or that have a single branching point. Examples include, but are not limited to, 1-octadecyl (meth)acrylate, 17-methyl-1-heptadecyl (meth)acrylate, and 1-tetradecyl (meth)acrylate.

Still other suitable non-polar (meth)acrylate esters for use herein are aryl (meth)acrylates such as, for example, phenyl (meth)acrylate or benzyl (meth)acrylate; alkenyl (meth)acrylates such as, for example, 3,7-dimethyl-6-octenyl-1 (meth)acrylate and allyl (meth)acrylate; and aryl substituted alkyl (meth)acrylates or aryloxy substituted alkyl (meth)acrylates such as, for example, 2-biphenylhexyl (meth)acrylate, benzyl (meth)acrylate, and 2-phenoxy ethyl (meth)acrylate.

In some typical aspects, it might be advantageous for the second non-polar monomer for use in the PSA assembly to have a relatively high Tg when formed into a homopolymer (i.e., a polymer prepared using a single polymerizable material), as these monomers have the ability to modulate the Tg of the polymerizable material so as to provide enhanced adhesive strength. When formed into a homopolymer, these monomers typically have a glass transition temperature (Tg) of at least 20°C, or at least 25°C, or at least 30°C, or at least 40°C, or even at least 50°C. However, the disclosure is not that limited, as a second non-polar monomer for use in the multilayer PSA assembly may also have a relatively low Tg when formed into a homopolymer, i.e. a Tg of below 20°C.

According to a particular aspect, the second non-polar monomer is for example selected from the group consisting of methyl (meth)acrylate, tert-butyl (meth)acrylate, ethyl (meth)acrylate, n-propyl (meth)acrylate, isopropyl (meth)acrylate, iso-butyl (meth)acrylate, stearyl (meth)acrylate, phenyl (meth)acrylate, cyclohexyl (meth)acrylate, isobornyl (meth)acrylate, benzyl (meth)acrylate, isophoryl (meth)acrylate, and any combinations or mixtures thereof.

In a preferred aspect, the second non-polar monomer for use herein is selected from the group consisting of isobornyl (meth)acrylate, cyclohexyl (meth)acrylate, isophoryl (meth)acrylate, cyclohexyl (meth)acrylate, and any combinations or mixtures thereof. According to a particularly preferred aspect, the second monomer is selected to comprise isobornyl (meth)acrylate.

Further second monomers having an ethylenically unsaturated group for use herein may include a monomer with an acidic group and a single ethylenically unsaturated group (i.e., an acidic monomer). These monomers are typically polar or strongly polar. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. The ethylenically unsaturated group can be a (meth)acryloyl group or a vinyl group (i.e., CH2=CH2- group) that is not a (meth)acryloyl group. Exemplary acidic monomers can have a carboxylic acid group, sulfonic acid group, phosphonic acid group, or salts thereof. Due to their availability, acidic monomers with carboxylic acid groups or salts thereof are often selected. If stronger acidic groups are desired, monomers with phosphonic acid, sulfonic acid groups, or salts thereof can be used. Examples of acidic monomers include, but are not limited to, (meth)acrylic acid, itaconic acid, fumaric acid, crotonic acid, citraconic acid, maleic acid, oleic acid, beta-carboxyethyl (meth)acrylate, 2-sulfoethyl methacrylate, styrene sulfonic acid, 2-acrylamido-2-methylpropanesulfonic acid, vinylphosphonic acid, or mixtures thereof. Any suitable salt of an acidic group can be used. In many embodiments, the cation of the salt is an ion of an alkaline metal (e.g., sodium, potassium, or lithium ion), an ion of an alkaline earth (e.g., calcium, magnesium, or strontium ion), an ammonium ion, or an ammonium ion substituted with one or more alkyl or aryl groups.

For differentiation of polarity, some examples will be given. In particular useful representatives of strongly polar monomers are acrylic acid, methacrylic acid, itaconic acid, hydroxyalkyl acrylates, acrylamides and substituted acrylamides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano acrylate, fumaric acid, crotonic acid, citronic acid, maleic acid, B-carboxyethyl acrylate or sulfoethyl methacrylate. The alkyl (meth)acrylate monomers enumerated above are typical examples of relatively poorly polar monomers. These examples are given for illustrative reasons only and are not to be understood as limiting. Among the group of polar monomers for use as the second monomer, N-vinyl caprolactam is particularly preferred.

For the pressure sensitive assemblies according to the present disclosure, the content of strongly polar acrylates is typically limited in order to provide good adhesion to LSE (Low Surface Energy) surfaces. Hence, it is advantageous that the polymerizable material for the pressure sensitive adhesive layer(s) of the multilayer PSA assembly comprises up to 10 weight percent of the strongly polar acrylate based on a total weight of polymerizable material, or from 0.1 to 10 weight percent, from 0.5 to 10 weight percent, from 1.0 to 10 weight percent, from 2.0 to 8.0 weight percent, from 2.5 to 6.0 weight percent, or even from 3.0 to 6.0 weight percent, when the PSA assembly is in particular intended for adhesion to LSE substrates.

Other second monomers having an ethylenically unsaturated group suitable for use herein include those with a single ethylenically unsaturated group and a hydroxyl group. These monomers tend to be polar. The ethylenically unsaturated group can be a (meth)acryloyl group or a vinyl group (i.e., CH2=CH2- group). Exemplary monomers with a hydroxyl group include, but are not limited to, hydroxyalkyl (meth)acrylates (e.g., 2-hydroxyethyl acrylate or 3-hydroxypropyl acrylate), hydroxyalkyl (meth)acrylamides (e.g., 2-hydroxyethyl acrylamide or 3-hydroxypropyl acrylamide), and ethoxylated hydroxyethyl methacrylate (e.g., monomers commercially available from Sartomer under the trade designation CD570, CD571, CD572).

Still other suitable second monomers having an ethylenically unsaturated group are those with a single ethylenically unsaturated group and a nitrogen-containing group or a salt thereof. Most of these monomers tend to be polar. The ethylenically unsaturated group can be a (meth)acryloyl group or a vinyl group (i.e., CH2=CH2- group). Examples of the nitrogen-containing groups include, but at not limited to, secondary amido groups and tertiary amido groups. Exemplary polar monomers with secondary amido groups include, but are not limited to, N-alkyl (meth)acrylamides such as N-methyl acrylamide, N-ethyl acrylamide, N-isopropyl acrylamide, tert-octyl acrylamide, or N-octyl acrylamide. Exemplary polar monomers with a tertiary amido group include, but are not limited to, N-vinyl caprolactam, N-vinyl-2-pyrrolidone, acryloyl morpholine, and N,N-dialkyl acrylamides such as N,N-dimethyl acrylamide, N,N-diethyl acrylamide, N,N-dipropyl acrylamide, N,N-dibutyl acrylamide, and any combinations or mixtures thereof.

Still other suitable polar second monomers having an ethylenically unsaturated group for use herein include those with a single ethylenically unsaturated group and an ether group (i.e., a group containing at least one alkylene-oxy-alkylene group of formula-R-O-R- where each R is an alkylene having 1 to 4 carbon atoms). These monomers tend to be polar. Exemplary monomers include, but are not limited to, alkoxylated alkyl (meth)acrylates such as ethoxyethoxyethyl acrylate, 2-methoxyethyl acrylate, and 2-ethoxyethyl acrylate; and a poly(alkylene oxide) acrylates such as poly(ethylene oxide) acrylates, and poly(propylene oxide) acrylates. The poly(alkylene oxide) acrylates are often referred to as poly(alkylene glycol) acrylates. These monomers can have any suitable end group such as a hydroxyl group or an alkoxy group. For example, when the end group is a methoxy group, the monomer can be referred to as methoxy poly(ethylene glycol) acrylate.

The various polar monomers may typically be added to increase adhesion of the pressure sensitive adhesive layer(s) of the PSA assembly to an adjacent layer such as a substrate or a backing layer, to enhance the cohesive strength of the polymerizable material, or both. Any of the polar monomers or salt thereof can be present in any suitable amounts. In some exemplary aspects, the polar monomers are present in amounts up to 15 weight percent based on a total weight of the polymerizable material used to produce the particular pressure-sensitive adhesive layer of the pressure sensitive adhesive assembly. Accordingly, in some exemplary aspects, the polar monomer, preferably a polar acrylate monomer, can be present in an amount in a range of from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a first polar monomer. In some other exemplary aspects, this amount is typically up to 10 weight percent or up to 5 weight percent. For example, the polar monomer can be present in an amount in a range of 0 to 15 weight percent, 0.5 to 15 weight percent, 1 to 15 weight percent, 0 to 10 weight percent, 0.5 to 10 weight percent, 1 to 10 weight percent, 0 to 5 weight percent, 0.5 to 5 weight percent, or 1 to 5 weight percent based on a total weight of the polymerizable material used to produce the particular pressure-sensitive adhesive layer of the pressure sensitive adhesive assembly.

In some aspects, the second monomer having an ethylenically unsaturated group for use herein is for example selected from the group consisting of methyl methacrylate, tert-butyl (meth)acrylate, ethyl (meth)acrylate, n-propyl (meth)acrylate, isopropyl (meth)acrylate, iso-butyl (meth)acrylate, stearyl (meth)acrylate, phenyl (meth)acrylate, cyclohexyl (meth)acrylate, isobornyl (meth)acrylate, benzyl (meth)acrylate, isophoryl (meth)acrylate, N-vinyl caprolactam, and any combinations or mixtures thereof.

More typically, the second monomer having an ethylenically unsaturated group for use herein is for example selected from the group consisting of isobornyl (meth)acrylate, cyclohexyl (meth)acrylate, isophoryl (meth)acrylate, cyclohexyl (meth)acrylate, N-vinyl caprolactam, and any combinations or mixtures thereof. Even more typically, the second monomer is selected from the group of isobornyl (meth)acrylate and N-vinyl caprolactam.

In one particularly preferred aspect, the second monomer having an ethylenically unsaturated group for use herein is selected to be isobornyl (meth)acrylate, preferably isobornyl acrylate.

According to a particular aspect of the pressure sensitive assembly of the present disclosure, the polymerizable material used to produce the particular pressure sensitive adhesive layer, comprises:
a) from 50 to 99.5 weight percent, or from 60 to 90 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate; optionally
b) from 1.0 to 50 weight percent, from 3.0 to 40 weight percent, from 5.0 to 35 weight percent, or even from 10 to 30 weight percent, of the second monomer having an ethylenically unsaturated group, preferably a second non-polar monomer having an ethylenically unsaturated group; optionally
c) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
d) a tackifying resin,
   wherein the weight percentages are based on the total weight of polymerizable material.

According to still another particular aspect of the pressure sensitive assembly, the polymerizable material used to produce the particular pressure sensitive adhesive layer, comprises:
a) of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate; optionally
b) from 1.0 to 50 weight percent, from 3.0 to 40 weight percent, from 5.0 to 35 weight percent, or even from 10 to 30 weight percent, of the second monomer having an ethylenically unsaturated group, preferably a second non-polar monomer having an ethylenically unsaturated group; optionally
c) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a first polar monomer, preferably a polar acrylate; optionally
d) a second polar monomer, preferably a polar non-acrylate monomer; and optionally
e) a tackifying resin;
   wherein the weight percentages are based on the total weight of polymerizable material.

According to another advantageous aspect of the multilayer PSA assembly, the particular pressure-sensitive adhesive composition (i.e. polymerizable material) used to produce the first pressure sensitive adhesive layer and/or the second pressure sensitive adhesive layer further comprises a tackifying resin, typically in an amount from 3 to 50 parts, from 5 to 30 parts, or even from 8 to 25 parts, per 100 parts of the polymerizable material.

In some executions, one or more tackifiers, one or more plasticizers, or a mixture thereof can be combined with the polymerizable material. Tackifiers (i.e., tackifying agents or tackifying resins) and plasticizers (i.e., plasticizing agents) are often added to modulate the T_{g}, modulate the storage modulus, and to alter the tackiness of the pressure-sensitive adhesive.

Any tackifiers that are included in the particular pressure-sensitive adhesive compositions are typically selected to be miscible with the polymerizable material. Any tackifier typically included in conventional pressure-sensitive adhesive compositions may be used. Either solid or liquid tackifiers can be added. Solid tackifiers generally have a number average molecular weight (Mw) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company under the trade designations PERMALYN, STAYBELITE, and FORAL as well as from Newport Industries under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobile Chemical under the trade designation ESCOREZ, and from Newport Industries under the trade designations NURES and H-REZ (Newport Industries).

Any of the tackifiers may be used in amounts of up to 100 parts relative to 100 parts of the polymerizable material. It is however preferred to use lower amounts of tackifiers. For example, the tackifiers can be used in amounts up to 50 parts, up to 45 parts, up to 40 parts, up to 35 parts, or up to 30 parts. The amount of tackifier can be for example, in the range of 3 to 50 parts, in the range of 3.5 to 45 parts, in the range of 4 to 40 parts, in the range of 4.5 to 35 parts, or in the range of 5 to 30 parts based on 100 parts of the polymerizable material. In some other aspects, the tackifier may be used in an amount from 3 to 100 parts, or from 3 to 80 parts based on 100 parts of the polymerizable material.

In an advantageous aspect of the pressure sensitive adhesive assembly of the present disclosure, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

Some pressure-sensitive adhesive compositions useful for the pressure sensitive adhesive assembly according to this disclosure may include one or more plasticizers. The plasticizer is typically selected to be compatible with (i.e., miscible with) the other components in the composition such as the polymerizable material and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, and sulfonamides, or naphthenic oils.

According to one particular aspect of the multilayer pressure sensitive adhesive assembly according to the present disclosure, the polymerizable material may further comprise a crosslinker (also referred to as crosslinking agent), preferably in an amount of up to 5 weight percent, based on the total weight of polymerizable material.

A crosslinker can also be used, in the context of the present disclosure, as a second monomer having an ethylenically unsaturated group. The crosslinker often increases the cohesive strength and the tensile strength of the polymerizable material. The crosslinker can have at least two functional groups which are capable of polymerizing with the first monomer or another monomer. That is, the crosslinker can have at least two ethylenically unsaturated groups. Suitable crosslinkers often have multiple (meth)acryloyl groups. Alternatively, the crosslinker can have at least two groups that are capable of reacting with various functional groups (i.e., functional groups that are not ethylenically unsaturated groups) on another monomer. For example, the crosslinker can have multiple groups that can react with functional groups such as acidic groups on other monomers.

Crosslinkers with multiple (meth)acryloyl groups can be di(meth)acrylates, tri(meth)acrylates, tetra(meth)acrylates, penta(meth)acrylates, and the like. These crosslinkers can be formed, for example, by reacting (meth)acrylic acid with a polyhydric alcohol (i.e., an alcohol having at least two hydroxyl groups). The polyhydric alcohol often has two, three, four, or five hydroxyl groups. Mixtures of crosslinkers may also be used.

In many aspects, the crosslinkers contain at least two (meth)acryloyl groups. Exemplary crosslinkers with two acryloyl groups include, but are not limited to, 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some aspects, the crosslinkers are polymeric material that contains at least two (meth)acryloyl groups. For example, the crosslinkers can be poly(alkylene oxides) with at least two acryloyl groups (e.g., polyethylene glycol diacrylates commercially available from Sartomer such as SR210, SR252, and SR603) or poly(urethanes) with at least two (meth)acryloyl groups (e.g., polyurethane diacrylates such as CN9018 from Sartomer). As the higher molecular weight of the crosslinkers increases, the resulting acrylic copolymer tends to have a higher elongation before breaking. Polymeric crosslinkers tend to be used in greater weight percent amounts compared to their non-polymeric counterparts.

Other types of crosslinkers can be used rather than those having at least two (meth)acryloyl groups. The crosslinker can have multiple groups that react with functional groups such as acidic groups on other second monomers. For example, monomers with multiple aziridinyl groups can be used that are reactive with carboxyl groups. For example, the crosslinkers can be a bis-amide crosslinker as described in US Patent 6,777,079 (Zhou et al.).

In other methods of crosslinking, photocrosslinkers (e.g., UV photocrosslinkers) are added. These photocrosslinkers can be copolymerizable with the various monomers used to form the elastomeric material (e.g., copolymerizable benzophenones) or can be added after polymerization. Suitable photocrosslinkers added after polymerization include, for example, multifunctional benzophenones, triazines (such as XL-330, which is 2,4,-bis(trichloromethyl)-6-(4-methoxyphenyl)-triazine from 3M Company, Saint Paul, MN), acetophenones, and the like.

In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE 202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A. Suitable accelerant and retardant systems for use herein are described e.g. in the description of US-A1-2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

If present, a crosslinker can be used in any suitable amount. In many aspects, the crosslinker is present in an amount of up 5 parts by weight based on a total weight of polymerizable material. In some aspects, the crosslinker is present in an amount up to 4 weight percent, up to 3 weight percent, up to 2 weight percent, or up to 1 weight percent. The crosslinker can be present, for example, in amounts greater than 0.01 weight percent, greater than 0.03 weight percent, greater than 0.05 weight percent, greater than 0.07 weight percent, or greater than 1 weight percent. In some aspects, the crosslinker is present in an amount in a range of 0 to 5 weight percent, 0.01 to 5 weight percent, 0.05 to 5 weight percent, 0 to 3 weight percent, 0.01 to 3 weight percent, 0.05 to 3 weight percent, 0 to 1 weight percent, 0.01 to 1 weight percent, or 0.05 to 1 weight percent. As another example, any of the polymerizable materials can include up to 5 weight percent crosslinker such as 0.01 to 5 weight percent, 0.05 to 5 weight percent, 0.07 to 5 weight percent, or 1 to 5 weight percent.

Aside from thermal, moisture or photosensitive crosslinking agents, crosslinking may also be achieved using high energy electromagnetic radiation such as gamma or e-beam radiation.

An initiator for free radical polymerization may typically be added to the various monomers used to form the polymerizable material. The polymerization initiator can be a thermal initiator, a photoinitiator, or both. Any suitable thermal initiator or photoinitiator known for free radical polymerization reactions can be used. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of polymerizable material.

In some executions, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium, potassium). Suitable oil-soluble initiators include, but are not limited to, various azo compounds such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In many executions, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ) or under the trade designation ESACURE KB-1 from Sartomer (Exton, PA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxy cyclohexyl phenyl ketone (IRGACURE 184), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylamino-1-(4-morpholinophenyl)butanone (IRGACURE 369), 2-methyl-1-[4-(methylthio)phenyl]-2-morpholinopropan-1-one (IRGACURE 907), and 2-hydroxy-2-methyl-1-phenyl propan-1-one (DAROCUR 1173).

The particular polymerizable material used to produce the first pressure sensitive adhesive layer and/or the second pressure sensitive adhesive layer may optionally further contain chain transfer agents to control the molecular weight of the resultant elastomeric material. Examples of useful chain transfer agents include, but are not limited to, carbon tetrabromide, alcohols, mercaptans such as isooctylthioglycolate, and mixtures thereof. If used, the polymerizable mixture may include up to 0.5 weight of a chain transfer agent based on a total weight of polymerizable material. For example, the polymerizable mixture can contain 0.01 to 0.5 weight percent, 0.05 to 0.5 weight percent, or 0.05 to 0.2 weight percent chain transfer agent.

According to one particular aspect of the pressure sensitive adhesive assembly according to the present disclosure, the particular polymerizable material used to produce the first pressure sensitive adhesive layer and/or the second pressure sensitive adhesive layer may further include one or more other vinyl monomers such as vinyl esters (e.g., vinyl acetate and vinyl propionate); styrene or derivatives thereof such as alkyl substituted styrene (e.g., α-methyl styrene); vinyl halide; or mixtures thereof. These monomers can be polar or non-polar. If present, these other vinyl monomer can be present in any suitable amount. In some aspects, the vinyl monomers are present in an amount of up 5 parts by weight, based on a total weight of polymerizable material. For example, the vinyl monomer can be used in amounts up to 4 weight percent, up to 3 weight percent, or up to 2 weight percent. In some particular aspects, the vinyl monomer is present in an amount in a range of 0 to 5 weight percent, 0.5 to 5 weight percent, 1 to 5 weight percent, 0 to 3 weight percent, or 1 to 3 weight percent.

The polymerizable material used to form the pressure sensitive adhesive layer(s) of the multilayer PSA assembly may include an organic solvent or may be free or essentially free of an organic solvent. As used herein, the term "essentially free" in reference to an organic solvent means that the means that the organic solvent is present in an amount less than 5 weight percent, less than 4 weight percent, less than 3 weight percent, less than 2 weight percent, or less than 1 weight percent based on the weight of the polymerizable material. If an organic solvent is included in the polymerizable material, the amount is often selected to provide the desired viscosity. Examples of suitable organic solvents include, but are not limited to, methanol, tetrahydrofuran, ethanol, isopropanol, heptane, acetone, methyl ethyl ketone, methyl acetate, ethyl acetate, toluene, xylene, ethylene glycol alkyl ether, and any combinations or mixtures thereof.

In some aspects, the polymerizable material used to form the pressure sensitive adhesive layer(s) of the multilayer PSA assembly of the present disclosure may further comprise, as an optional ingredient, a filler material. Such fillers may be advantageously used to e.g. increase the mechanical stability of the pressure sensitive adhesive assembly and may also increase its shear and peel force resistance.

Any filler material commonly known to those skilled in the art may be used in the context of the present disclosure. Typical examples of filler material that can be used herein include, but are not limited to, those selected from the group consisting of expanded perlite, microspheres, expandable microspheres, ceramic spheres, zeolites, clay fillers, glass beads, hollow inorganic beads, silica type fillers, hydrophobic silica type fillers, hydrophilic silica type fillers, fumed silica, fibers, in particular glass fibers, carbon fibers, graphite fibers, silica fibers, ceramic fibers, electrically and/or thermally conducting particles, nanoparticles, in particular silica nanoparticles, and any combinations thereof.

In a particular aspect of the present disclosure, the polymerizable material used to form the first and/or the second pressure sensitive adhesive layer further comprises at least one filler material which is selected from the group consisting of microspheres, expandable microspheres, for example pentane filled expandable microspheres, gaseous cavities, glass beads, glass microspheres, glass bubbles and any combinations or mixtures thereof. In some aspects, the at least one filler material for use herein is selected from the group consisting of expandable microspheres, glass bubbles, and any combinations or mixtures thereof.

As will be apparent to those skilled in the art in the light of the present disclosure, other additives may optionally be included in the polymerizable material used to form the first and/or the second pressure sensitive adhesive layer to achieve any desired properties. Such additives include, but are not limited to, further tackifiers, pigments, toughening agents, reinforcing agents, fire retardants, antioxidants, and various stabilizers. The additives are typically added in amounts sufficient to obtain the desired end properties.

The particular pressure-sensitive adhesive compositions may be prepared by a variety of conventional free radical polymerization methods, including solution, bulk (i.e., with little or no solvent), dispersion, emulsion, and suspension processes. The particular method used may be influenced by the use of the final pressure sensitive adhesive composition. The reaction product of the polymerizable materials can be random or block copolymers.

In some methods of preparing the pressure sensitive adhesive composition(s) for the pressure sensitive adhesive layer(s) of the PSA assembly according to the disclosure, the polymerizable material containing the monomers is partially polymerized so as to increase its viscosity to that corresponding to a syrup-like material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group). Then, the crosslinker and any remaining portion of the initiator may be added to the syrup-like, partially polymerized material. Optional tackifiers and plasticizers may also be combined with the partially polymerized material. The resulting mixture can be more readily applied as a coating composition onto a support (e.g., release liner) or another layer (e.g., polymeric foam layer). The coating layer can then be exposed to actinic radiation if a photoinitator is present or to heat if a thermal initiator is present. Exposure to actinic radiation or heat typically results in the further reaction of polymerizable material within the coating composition.

To be useful as a pressure sensitive adhesive, the pressure sensitive adhesive material typically has a storage modulus less than 300,000 Pascals at 25°C. The storage modulus of the pressure-sensitive adhesive material usually is no greater than 200,000 Pascals, no greater than 100,000 Pascals, no greater than 50,000 Pascals, or no greater than 25,000 Pascal at 25°C. For example, the storage modulus can be no greater than 10,000 Pascals, no greater than 9,000 Pascals, no greater than 8,000 Pascals, or no greater than 7,500 Pascals at 25°C. A lower storage modulus is often desirable for high performance pressure-sensitive adhesives.

In a particular aspect of the multilayer pressure sensitive adhesive (PSA) assembly according to present disclosure, the first and/or the second polymeric material is obtained by actinic radiation polymerization. In one typical aspect, the first and the second polymeric material are obtained by actinic radiation polymerization.

In still another particular aspect of the multilayer pressure sensitive adhesive assembly according to present disclosure, the first and/or the second polymeric material is crosslinked, preferably with actinic radiation, more preferably with e-beam irradiation. According to one preferred aspect, the first and/or the second polymeric material used to form the first and/or the second pressure sensitive adhesive layer of the multilayer pressure sensitive adhesive assembly is crosslinked with e-beam irradiation, wherein the e-beam irradiation dose is of less than 150 kGy, less than 130 kGy, less than 100 kGy, less than 80 kGy, less than 50 kGy, or even less than 30 kGy. Typically, the e-beam irradiation dose is of at least 5 kGy, at least 10 kGy, or even at least 20kGy.

According to one particular execution of the multilayer pressure sensitive adhesive assembly of the present disclosure, the first and/or the second PSA layer takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may be obtained by any of the known methods such as cells formed by gas. Alternatively, the voids may result from the incorporation of hollow fillers, such as hollow polymeric particles, hollow glass microspheres or hollow ceramic microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application and requirements.

A polymeric foam layer typically has a density comprised between 0.40 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create an acrylic polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

Alternatively, a polymeric foam may be obtained by including hollow particles i.e., hollow microspheres into a polymerizable composition for making the polymeric foam. Examples of hollow microspheres include expanded or expandable thermoplastic polymer microspheres and glass microbubbles. Examples of expanded or expandable thermoplastic polymer microspheres are disclosed in US Patent No. 4,855,170 and include the commercially available hollow polymeric microspheres from Pierce & Stevens Company under the tradename MICROLITE™ and MIRALITE™. Further commercially available expanded or expandable polymeric microspheres include EXPANCEL™ (Kema Nord Plastics) and MICROPEARL™ (Matsomoto Yushi Seiyaku). The hollow thermoplastic polymer microspheres typically have an average diameter of 5 to 150 microns or of 10 to 100 microns. Suitable glass microspheres typically have an average diameter of 10 to 200 micrometers. Microspheres of smaller average diameter would tend to be unduly expensive, whereas it would be difficult to coat out a polymerizable mixture containing microspheres of larger average diameter. Typically, the average diameter of the microbubbles is within the range of 20 to 80 micrometers. The glass microspheres typically have a specific gravity of less than 1. Polymeric foam layers having glass microspheres are particularly preferred for use herein as they will likely be less compressible than polymeric foams where voids are introduced in a different way. Polymeric foams for use herein are commercially available from various suppliers such as 3M Co., Voltek, Sekisui, and others.

In the particular aspect according to which the multilayer pressure sensitive adhesive assembly of the present disclosure comprises a polymeric foam layer, it may advantageously take the form of skin/core type multilayer pressure sensitive adhesive assembly, wherein the pressure sensitive adhesive foam layer is the core layer of the multilayer pressure sensitive adhesive assembly and a non-foamed pressure sensitive adhesive layer is the skin layer of the multilayer pressure sensitive adhesive assembly. This particular execution is commonly referred to as a dual layer polymeric foam tape assembly. Skin/core type of multilayer pressure sensitive adhesive assemblies are well known to those skilled in the art.

Multilayer pressure sensitive adhesive assemblies according to the present disclosure, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer). In some aspects, the multilayer pressure sensitive adhesive assemblies as disclosed herein are smooth, homogenous and consist of layers which are adhered to each other, without any delamination occurring.

In some aspects, it may be advantageous for the multilayer pressure sensitive adhesive assemblies of the present disclosure to further comprise a third pressure sensitive adhesive layer, and thereby forming a three-layered multilayer pressure sensitive adhesive assembly.

Three-layered multilayer pressure sensitive adhesive assemblies according to one aspect of the disclosure, may advantageously take the form of a skin/core/skin multilayer pressure sensitive adhesive assembly, wherein the pressure sensitive adhesive foam layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

In some aspects, the pressure sensitive adhesive assembly according to the present disclosure is crosslinked, preferably with actinic radiation, more preferably with e-beam irradiation. According to one preferred aspect, the pressure sensitive adhesive assembly is crosslinked with e-beam irradiation, wherein the e-beam irradiation dose is preferably of less than 150 kGy, less than 130 kGy, less than 100 kGy, less than 80 kGy, less than 50 kGy, or even less than 30 kGy. Typically, the e-beam irradiation dose is of at least 5 kGy, at least 10 kGy, or even at least 20kGy.

The thickness of the various pressure sensitive adhesive layer(s), for use in the pressure sensitive adhesive assembly according to the present disclosure, may vary in wide ranges.

In the particular aspect according to which the multilayer pressure sensitive adhesive assembly of the present disclosure takes the form of skin/core type multilayer pressure sensitive adhesive assembly, wherein the pressure sensitive adhesive foam layer is the core layer of the multilayer pressure sensitive adhesive assembly and a non-foamed pressure sensitive adhesive layer is the skin layer of the multilayer pressure sensitive adhesive assembly, it is however preferred that the non-foamed pressure sensitive adhesive layer exhibits a lower thickness compared to the polymeric foam layer. As an example, the thickness of the non-foamed pressure sensitive adhesive layer may be in the range from 800 to 2000 µm. Such multilayer PSA assemblies typically exhibit high peel adhesion, presumably caused by a stabilizing effect of the relatively thick polymeric foam layer compared to the skin PSA layer.

According to the disclosure, the multilayer pressure sensitive adhesive assembly comprises at least two PSA layers having a caliper of at least 800 µm, at least 1000 µm, or even at least 1500 µm.

The multilayer pressure sensitive adhesive assembly according the present disclosure may be prepared by a variety of conventional manufacturing methods provided that the various constituting PSA layers are superimposed to each others in an appropriate manner. Suitable manufacturing methods may be easily identified by those skilled in the art in the light of the present disclosure. Exemplary manufacturing methods include, but are not limited to, co-extrusion, solvent-based methods, wet-in-wet coating methods, lamination techniques, hotmelt processing or any combinations thereof.

According to a particular aspect of the present disclosure, the multilayer pressure sensitive adhesive is obtained according to a manufacturing method whereby the first and second PSA layers (and any other additional PSA layers) are prepared separately and subsequently laminated to each other using conventional laminations techniques.

According to a particularly advantageous aspect, the multilayer pressure sensitive adhesive assembly of the present disclosure, has a peel strength value of more than 15 N/cm, more than 20 N/cm, more than 25 N/cm, more than 30 N/cm, or even more than 35 N/cm, when measured at RT according to the T-Peel test method described in the experimental section.

According to another particularly advantageous aspect, the multilayer pressure sensitive adhesive assembly of the present disclosure, has a static shear strength value of more than 200 min, more than 300 min, more than 350 min, more than 400 min, or even more than 450 min, when measured at 70°C according to the static shear test method described in the experimental section.

In another advantageous execution, the multilayer pressure sensitive adhesive assembly of the present disclosure is (optically) clear. This advantageous characteristic is in particular permitted by the absence of primer compositions between the various PSA layers present in the multilayer pressure sensitive adhesive assembly of the present disclosure.

The present disclosure is further directed to a method of manufacturing a multilayer pressure sensitive adhesive (PSA) assembly according to any of the preceding claims, comprising the steps of:
a) providing a plurality of pressure sensitive adhesive (PSA) layers, wherein the plurality of PSA layers comprises at least a first PSA layer comprising a first polymeric material comprising the reaction product of a first (co)polymerizable material comprising a carboxyl group-containing (co)monomer, and at least a second PSA layer comprising a second polymeric material comprising the reaction product of a second (co)polymerizable material comprising a nitrogen-containing (co)monomer, and wherein the multilayer pressure sensitive adhesive assembly comprises at least two PSA layers having a caliper of at least 800 µm; and
b) superimposing the plurality of PSA layers by lamination techniques according to an arrangement such that the first PSA layer(s) and the second PSA layer(s) are adjacently superimposed in a strictly alternating series.

According to the method according to the present disclosure, the step of superimposing the plurality of PSA layers is performed by lamination techniques.

According to this method, the plurality of PSA layers is prepared separately and subsequently laminated to each other.

The multilayer pressure sensitive adhesive assembly of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The multilayer pressure sensitive adhesive assemblies of the present disclosure may be used in any article conventionally known to use such assemblies such as labels, tapes, signs, covers, marking indices, display components, touch panels, and the like. Flexible backing materials having microreplicated surfaces are also contemplated.

The multilayer pressure sensitive adhesive assembly may be coated/applied on a substrate using any conventional coating techniques modified as appropriate to the particular substrate. For example, pressure sensitive adhesive assemblies may be applied/coated to a variety of solid substrates by methods such as roller coating, flow coating, dip coating, spin coating, spray coating knife coating, and die coating. These various methods of coating allow the pressure sensitive adhesive assemblies to be placed on the substrate at variable thicknesses thus allowing a wider range of use of the assemblies.

The pressure sensitive adhesive assembly according to the present disclosure may be particularly useful for forming strong adhesive bonds to low surface energy (LSE) substrates. Included among such materials are polypropylene, polyethylene (e.g., high density polyethylene or HDPE), blends of polypropylene (e.g. PP/EPDM, TPO). Other substrates may also have properties of low surface energy due to a residue, such as an oil residue or a film, such as paint, being on the surface of the substrate.

However, the use of these multilayer pressure sensitive adhesive assemblies is not limited to low surface energy substrates. The multilayer pressure sensitive adhesives assemblies may, in some aspects, also bond well to medium surface energy (MSE) substrates such as, for example, polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In some aspects, the multilayer pressure sensitive adhesive assemblies according to the present disclosure may also provide strong adhesive bond to higher surface energy (HSE) substrates such as, for example, ceramics, glasses, and metals.

Accordingly, the present disclosure is further directed to the use of a multilayer pressure sensitive adhesive assembly as above described for the bonding to a low surface energy substrate, a medium surface energy substrate and/or a high surface energy substrate, in particular for the bonding to a low surface energy substrate or a medium surface energy substrate.

The substrate to which the multilayer pressure sensitive adhesive assembly may be applied is selected depending on the particular application. For example, the multilayer pressure sensitive adhesive assembly, in particular via its pressure sensitive adhesive skin layer(s), if any, may be applied to sheeting products (e.g., decorative graphics and reflective products), label stock, and tape backings. Additionally, the multilayer pressure sensitive adhesive assembly may be applied directly onto other substrates such as a metal panel (e.g., automotive panel) or a glass window so that yet another substrate or object can be attached to the panel or window. Accordingly, the multilayer pressure sensitive adhesive assembly of the present disclosure may find a particular use in the automotive manufacturing industry (e.g. for attachment of exterior trim parts or for weatherstrips), in the construction industry or in the solar panel construction industry.

Accordingly, the present disclosure is further directed to the use of a pressure sensitive adhesive assembly as above described for industrial applications, in particular for construction applications and automotive applications.

The multilayer pressure sensitive adhesive assembly may also be provided as a single coated or double coated tape in which the pressure sensitive adhesive assembly is disposed on a permanent backing. Backings can be made from plastics (e.g., polypropylene, including biaxially oriented polypropylene, vinyl, polyethylene, polyester such as polyethylene terephthalate), nonwovens (e.g., papers, cloths, nonwoven scrims), metal foils, foams (e.g., polyacrylic, polyethylene, polyurethane, neoprene), and the like. For a single-sided tape, the pressure sensitive adhesive assembly is applied to one surface of the backing material and a suitable release material is applied to the opposite surface of the backing material. Release materials are known and include materials such as, for example, silicones, polyolefins, polycarbamates, polyacrylics, and the like. For double coated tapes, the pressure sensitive adhesive assembly is applied to one surface of the backing material and a multilayer pressure sensitive adhesive assembly is disposed on the opposite surface of the backing material. Double coated tapes are often carried on a release liner.

The present invention is explained in more detail with the following examples. These examples are merely for illustrative purposes only and are not meant to be limiting on the scope of the appended claims.

### EXAMPLES

### Test Methods applied:

### T-Peel-test at 300 mm/min:

Multilayer pressure sensitive adhesive film strips according to the present invention and having a width of 10 mm and a length > 175 mm are cut out in the machine direction from the sample material.

For test sample preparation the liner is first removed from the one adhesive side and placed on an aluminium strip having the following dimension 22 X 1.6 cm. Then, the adhesive coated side of each multilayer PSA film strip is placed, after the liner is removed, with its adhesive side down on an aluminium strip using light finger pressure. Next, the test samples are rolled twice in each direction with a test roller (weight 6.8 kg) at a speed of approximately 10 mm per second to obtain intimate contact between the adhesive mass and the surface. After applying the pressure sensitive adhesive film strips to the aluminium strips, the test samples are allowed to dwell 24 hours at ambient room temperature (23°C +/- 2°C, 50% relative humidity +/-5%) prior to testing.

For testing, the test samples are in a first step clamped in the lower and upper jaw of a Zwick tensile tester (Model Z020 commercially available from Zwick/Roell GmbH, Ulm, Germany). The tensile tester is set at 300 mm per minute jaw separation rate. Test results are expressed in Newton per 10 mm (N/10 mm). The quoted peel values are the average of two peel measurements.

### Static shear test @ 70 °C with 1000 g hanging weights:

The static shear is a measure of the cohesiveness or internal strength of an adhesive. It is measured in units of time (minutes) required to pull a standard area of adhesive sheet material from a stainless steel test panel under stress of a constant, standard load.

A multilayer PSA film strip of 10 mm width and 25 mm length is cut out in machine direction from the sample. One of the attached surface liners is then removed and the specimen placed with the non-tested side of the foam on an aluminum backing. Then the second release liner is removed and the foam is attached to the test substrate (plate), providing a bond area of 10 mm x 25 mm and using light finger pressure. The standard FINAT test roller (weight 6.8 kg) is rolled twice in each direction at a speed of approximately 5 mm per second to obtain intimate contact between the adhesive mass and the substrate surface (test plate). After applying the foam strip (specimen) to the test plate, the test plate is allowed a dwell time at room temperature (23°C +/-2°C, 50% relative humidity +/-5%) for a period of 24 h before testing.

The test panel is placed in a shear holding device. After a 10 minute dwell time at the test temperature of 70°C for stainless steel, the 1000 g load is hung into the hole on the test panel. The timer is started. The results are recorded in minutes until failure and are the average of two shear measurements.

### Materials used:

In the examples, the following materials are used:
**4918 F:** Clear acrylic foam tape commercially available from 3M Deutschland GmbH (Germany) and having an adhesive thickness of 2000 µm.
**4910:** Clear acrylic foam tape commercially available from 3M Deutschland GmbH (Germany) and having an adhesive thickness of 1000 µm.
**9465:** Clear acrylic transfer tape commercially available from the 3M Company (USA) and having an adhesive thickness of 130 µm.
**Melinex 505:** Clear heat stabilized polyester film commercially available from DuPont (USA) and having a thickness of 125 µm.
**Hostaphan RN 25:** Biaxially oriented PET film commercially available from Mitsubishi Polyester Film Group and having a thickness of 25 µm.

### Preparation of the multilayer pressure sensitive adhesive assemblies:

Strips of 10 mm width and 25 mm length are cut out in machine direction from the various commercially available pressure sensitive adhesive layers used for the examples. The resulting strips are hand-laminated with manual pressure at room temperature and without application of heat. The samples were stored at room temperature for 24 h before testing.

### Test results:

The various multilayer PSA assemblies used for the T-peel and static shear testing have the following characteristics, as listed in Table 1 below.

**Table 1:**

| | Layer construction | Overall caliper (µm) | Acidic/Basic nature | T-Peel 24h/RT | Static shear 1000g/70°C (min) |
|---|---|---|---|---|---|
| C1 | 4918 | 2000 | acidic | 30.0 | 840 |
| C2 | 4910/4910 | 2000 | acidic/acidic | 12.8 | 10 |
| Ex.1 | 4910/9465/4910 | 2130 | acidic/basic/acidic | 35.1 | 439 |
| C3 | 4910/M505/4910 | 2125 | acidic/-/acidic | 11.4 | 42 |
| C4 | 4910/RN25/4910 | 2025 | acidic/-/acidic | 10.6 | 304 |

The results summarized in Table 1 above clearly show the improved combined T-peel and static shear performance of a multilayer PSA assembly according to the present disclosure (Ex.1) when compared to pressure sensitive adhesive constructions not according to the present disclosure (C1 to C4). Comparative example C1 is a monolayer construction. Comparative examples C3 and C4 are multilayer constructions comprising an intermediate polyester film (non-PSA).

## Claims

1. A multilayer pressure sensitive adhesive (PSA) assembly having an overall caliper of at least 2000 µm and comprising a plurality of superimposed pressure sensitive adhesive (PSA) layers, wherein the PSA assembly comprises at least a first PSA layer comprising a first polymeric material comprising the reaction product of a first (co)polymerizable material comprising a carboxyl group-containing (co)monomer, wherein the PSA assembly further comprises at least a second PSA layer comprising a second polymeric material comprising the reaction product of a second (co)polymerizable material comprising a nitrogen-containing (co)monomer, wherein the plurality of superimposed PSA layers is arranged such that the first PSA layer(s) and the second PSA layer(s) are adjacently superimposed in a strictly alternating series, wherein the multilayer pressure sensitive adhesive assembly comprises at least two PSA layers having a caliper of at least 800 µm, and wherein the first and the second PSA layers are prepared separately and subsequently laminated to each other.

2. A multilayer pressure sensitive adhesive assembly according to claim 1, wherein the multilayer pressure sensitive adhesive assembly comprises at least two PSA layers having a caliper of at least 1000 µm.

3. A multilayer pressure sensitive adhesive assembly according to claim 1 or 2, which has an overall caliper of at least 2500 µm.

4. A multilayer pressure sensitive adhesive assembly according to any of the preceding claims, wherein the first and/or the second polymeric material comprises a polymer base material selected from the group consisting of polyacrylates, polyolefins, polyesters, polyethers, polyisobutylene, polystyrenes, polyvinyls, natural rubbers, synthetic rubbers, and any combinations, copolymers or mixtures thereof.

5. A multilayer pressure sensitive adhesive assembly according to any of the preceding claims, wherein the first and/or the second polymeric material comprises a polymer base material selected from the group consisting of polyacrylates whose main monomer component comprises a linear or branched alkyl (meth)acrylate ester, preferably a non-polar linear or branched alkyl (meth)acrylate ester having a linear or branched alkyl group comprising preferably from 1 to 32 carbon atoms.

6. A multilayer pressure sensitive adhesive assembly according to any of the preceding claims, wherein the carboxyl group-containing (co)monomer is selected from the group consisting of methacrylic acid, acrylic acid, and any combinations, mixtures or salts thereof.

7. A multilayer pressure sensitive adhesive assembly according to any of the preceding claims, wherein the first (co)polymerizable material comprises from 3 to 20 weight percent of a carboxyl group-containing (co)monomer, based on the total weight of the first (co)polymerizable material.

8. A multilayer pressure sensitive adhesive assembly according to any of the preceding claims, wherein the nitrogen group-containing (co)monomer is selected from the group consisting of N-vinyl-caprolactam, N-vinyl-2-pyrrolidone, acryloyl morpholine, and N,N-dialkyl acrylamides, and any combinations, mixtures or salts thereof.

9. A multilayer pressure sensitive adhesive assembly according to any of the preceding claims, wherein the second (co)polymerizable material comprises from 5 to 40 weight percent of a nitrogen-containing (co)monomer, based on the total weight of the second (co)polymerizable material.

10. A multilayer pressure sensitive adhesive assembly according to any of the preceding claims, wherein the first and/or the second polymeric material is obtained by actinic radiation polymerization.

11. A multilayer pressure sensitive adhesive assembly according to any of the preceding claims, wherein the first PSA layer has a caliper of at least 800 µm.

12. A multilayer pressure sensitive adhesive assembly according to any of the preceding claims, wherein the second PSA layer has a caliper of at least 10 µm.

13. A multilayer pressure sensitive adhesive assembly according to any of the preceding claims, which has a static shear strength value of more than 200 min when measured at 70°C according to the static shear test method described in the experimental section.

14. A method of manufacturing a multilayer pressure sensitive adhesive (PSA) assembly according to any of the preceding claims, comprising the steps of:
a) providing a plurality of pressure sensitive adhesive (PSA) layers, wherein the plurality of PSA layers comprises at least a first PSA layer comprising a first polymeric material comprising the reaction product of a first (co)polymerizable material comprising a carboxyl group-containing (co)monomer, and at least a second PSA layer comprising a second polymeric material comprising the reaction product of a second (co)polymerizable material comprising a nitrogen-containing (co)monomer, and wherein the multilayer pressure sensitive adhesive assembly comprises at least two PSA layers having a caliper of at least 800 µm; and
b) superimposing the plurality of PSA layers by lamination techniques according to an arrangement such that the first PSA layer(s) and the second PSA layer(s) are adjacently superimposed in a strictly alternating series.

## Patentansprüche

1. Mehrschichtige druckempfindliche Haftmittelanordnung (PSA) mit einer Gesamtdicke von mindestens 2000 µm und umfassend eine Vielzahl von überlagerten druckempfindlichen Haftmittelschichten (PSA), wobei die PSA-Anordnung mindestens eine erste PSA-Schicht, umfassend ein erstes Polymermaterial, umfassend das Reaktionsprodukt eines ersten (co)polymerisierbaren Materials, umfassend ein carboxylgruppenhaltiges (Co)Monomer, umfasst, wobei die PSA-Anordnung ferner mindestens eine zweite PSA-Schicht, umfassend ein zweites Polymermaterial, umfassend das Reaktionsprodukt eines zweiten (co)polymerisierbaren Materials, umfassend ein stickstoffhaltiges (Co)Monomer, umfasst, wobei die Vielzahl von überlagerten PSA-Schichten so angeordnet ist, dass die erste(n) PSA-Schicht(en) und die zweite(n) PSA-Schicht(en) in einer streng abwechselnden Reihenfolge angrenzend überlagert sind, wobei die mehrschichtige druckempfindliche Haftmittelanordnung mindestens zwei PSA-Schichten mit einer Dicke von mindestens 800 µm umfasst, und wobei die ersten und die zweiten PSA-Schichten separat hergestellt werden und anschließend miteinander laminiert werden.

2. Mehrschichtige druckempfindliche Haftmittelanordnung nach Anspruch 1, wobei die mehrschichtige druckempfindliche Haftmittelanordnung mindestens zwei PSA-Schichten mit einer Dicke von mindestens 1000 µm umfasst.

3. Mehrschichtige druckempfindliche Haftmittelanordnung nach Anspruch 1 oder 2, die eine Gesamtdicke von mindestens 2500 µm aufweist.

4. Mehrschichtige druckempfindliche Haftmittelanordnung nach einem der vorstehenden Ansprüche, wobei das erste und/oder das zweite Polymermaterial ein Polymerbasismaterial umfasst, das ausgewählt ist aus der Gruppe bestehend aus Polyacrylaten, Polyolefinen, Polyestern, Polyethern, Polyisobutylenen, Polystyrolen, Polyvinylen, Naturkautschuken, Synthesekautschuken und beliebigen Kombinationen, Copolymeren oder Mischungen davon.

5. Mehrschichtige druckempfindliche Haftmittelanordnung nach einem der vorstehenden Ansprüche, wobei das erste und/oder das zweite Polymermaterial ein Polymerbasismaterial umfasst, das ausgewählt ist aus der Gruppe bestehend aus Polyacrylaten, deren Hauptmonomerkomponente einen linearen oder verzweigten Alkyl(meth)acrylatester, vorzugsweise einen nicht polaren, linearen oder verzweigten Alkyl(meth)acrylatester mit einer linearen oder verzweigten Alkylgruppe umfasst, die vorzugsweise von 1 bis 32 Kohlenstoffatome umfasst.

6. Mehrschichtige druckempfindliche Haftmittelanordnung nach einem der vorstehenden Ansprüche, wobei das carboxylgruppenhaltige (Co)Monomer ausgewählt ist aus der Gruppe bestehend aus Methacrylsäure, Acrylsäure, und beliebige Kombinationen, Mischungen oder Salze davon.

7. Mehrschichtige druckempfindliche Haftmittelanordnung nach einem der vorstehenden Ansprüche, wobei das erste (co)polymerisierbare Material von 3 bis 20 Gew.-% eines carboxylgruppenhaltigen (Co)Monomers, bezogen auf das Gesamtgewicht des ersten (co)polymerisierbaren Materials, umfasst.

8. Mehrschichtige druckempfindliche Haftmittelanordnung nach einem der vorstehenden Ansprüche, wobei das stickstoffhaltige (Co)Monomer ausgewählt ist aus der Gruppe bestehend aus N-Vinyl-Caprolactam, N-Vinyl-2-Pyrrolidon, Acryloylmorpholin, und N, N-Dialkylacrylamide, und beliebige Kombinationen, Mischungen oder Salze davon.

9. Mehrschichtige druckempfindliche Haftmittelanordnung nach einem der vorstehenden Ansprüche, wobei das zweite (co)polymerisierbare Material von 5 bis 40 Gew.-% eines stickstoffhaltigen (Co)Monomers, bezogen auf das Gesamtgewicht des zweiten (co)polymerisierbaren Materials, umfasst.

10. Mehrschichtige druckempfindliche Haftmittelanordnung nach einem der vorstehenden Ansprüche, wobei das erste und/oder das zweite Polymermaterial durch Polymerisation mit aktinischer Strahlung erhalten wird.

11. Mehrschichtige druckempfindliche Haftmittelanordnung nach einem der vorstehenden Ansprüche, wobei die erste PSA-Schicht eine Dicke von mindestens 800 µm aufweist.

12. Mehrschichtige druckempfindliche Haftmittelanordnung nach einem der vorstehenden Ansprüche, wobei die zweite PSA-Schicht eine Dicke von mindestens 10 µm aufweist.

13. Mehrschichtige druckempfindliche Haftmittelanordnung nach einem der vorstehenden Ansprüche, die einen statischen Scherfestigkeitswert von mehr als 200 µm aufweist, wenn bei 70 °C entsprechend dem, in dem experimentellen Abschnitt beschriebenen statischen Schertestverfahren gemessen wird.

14. Verfahren zur Herstellung einer mehrschichtigen druckempfindlichen Haftmittelanordnung (PSA) nach einem der vorstehenden Ansprüche, umfassend die folgenden Schritte:
a) Bereitstellen einer Mehrzahl von druckempfindlichen Haftmittelschichten (PSA), wobei die Mehrzahl von PSA-Schichten mindestens eine erste PSA-Schicht, umfassend ein erstes Polymermaterial, umfassend das Reaktionsprodukt eines ersten (co)polymerisierbaren Materials, umfassend ein carboxylgruppenhaltiges (Co)Monomer, umfasst, und mindestens eine zweite PSA-Schicht, umfassend ein zweites Polymermaterial, umfassend das Reaktionsprodukt eines zweiten (co)polymerisierbaren Materials, umfassend ein stickstoffhaltiges (Ko)Monomer umfasst, und wobei die mehrschichtige druckempfindliche Haftmittelanordnung 10 mindestens zwei PSA-Schichten mit einer Dicke von mindestens 800 µm, umfasst; und
b) Überlagern der Mehrzahl von PSA-Schichten durch Laminierungstechniken entsprechend einer Anordnung, sodass die ersten PSA-Schicht(en) und die zweite(n) PSA-Schicht(en) in einer streng abwechselnden Reihenfolge angrenzend überlagert sind.

## Revendications

1. Ensemble adhésif sensible à la pression (PSA) multicouche ayant une épaisseur globale d'au moins 2000 µm et comprenant une pluralité de couches superposées d'adhésif sensible à la pression (PSA), dans lequel l'ensemble PSA comprend au moins une première couche PSA comprenant un premier matériau polymère comprenant le produit de réaction d'un premier matériau (co)polymérisable comprenant un (co)monomère contenant un groupe carboxyle, dans lequel l'ensemble PSA comprend en outre au moins une deuxième couche sPSA comprenant un deuxième matériau polymère comprenant le produit de réaction d'un deuxième matériau (co)polymérisable comprenant un (co)monomère contenant de l'azote, dans lequel la pluralité de couches PSA superposées est disposée de telle sorte que la/les première(s) couche(s) sPSA et la/les deuxième(s) couche(s) PSA sont superposées de manière adjacente selon une série strictement alternée, dans lequel l'ensemble adhésif sensible à la pression multicouche comprend au moins deux couches PSA possédant une épaisseur d'au moins 800 µm, et dans lequel les première et deuxième couches PSA sont préparées séparément et ensuite stratifiées l'une à l'autre.

2. Ensemble adhésif sensible à la pression multicouche selon la revendication 1, dans lequel l'ensemble adhésif sensible à la pression multicouche comprend au moins deux couches PSA ayant une épaisseur d'au moins 1000 µm.

3. Ensemble adhésif sensible à la pression multicouche selon la revendication 1 ou 2, qui a une épaisseur globale d'au moins 2500 µm.

4. Ensemble adhésif sensible à la pression multicouche selon l'une quelconque des revendications précédentes, dans lequel le premier et/ou le deuxième matériau polymère comprend un matériau de base polymère choisi dans le groupe constitué de polyacrylates, polyoléfines, polyesters, polyéthers, polyisobutylène, polystyrènes, polyvinyles, caoutchoucs naturels, caoutchoucs synthétiques, et toute combinaison, tout copolymère ou tout mélange de ceux-ci.

5. Ensemble adhésif sensible à la pression multicouche selon l'une quelconque des revendications précédentes, dans lequel le premier et/ou le deuxième matériau polymère comprend un matériau de base polymère choisi dans le groupe constitué de polyacrylates dont le composant monomère principal comprend un ester (méth)acrylate d'alkyle linéaire ou ramifié, de préférence un ester (méth)acrylate d'alkyle linéaire ou ramifié non polaire ayant un groupe alkyle linéaire ou ramifié comprenant de préférence de 1 à 32 atomes de carbone.

6. Ensemble adhésif sensible à la pression multicouche selon l'une quelconque des revendications précédentes, dans lequel le (co)monomère contenant un groupe carboxyle est choisi dans le groupe constitué par l'acide méthacrylique, l'acide acrylique et toute combinaison, tout mélange ou tout sel de ceux-ci.

7. Ensemble adhésif sensible à la pression multicouche selon l'une quelconque des revendications précédentes, dans lequel le premier matériau (co)polymérisable comprend de 3 à 20 pour cent en poids d'un (co)monomère contenant un groupe carboxyle, sur la base du poids total du premier matériau (co)polymérisable.

8. Ensemble adhésif sensible à la pression multicouche selon l'une quelconque des revendications précédentes, dans lequel le (co)monomère contenant un groupe azote est choisi dans le groupe constitué par le N-vinylcaprolactame, la N-vinyl-2-pyrrolidone, l'acryloylmorpholine, et des N,N-dialkylacrylamides, et toute combinaison, tout mélange ou tout sel de ceux-ci.

9. Ensemble adhésif sensible à la pression multicouche selon l'une quelconque des revendications précédentes, dans lequel le deuxième matériau (co)polymérisable comprend de 5 à 40 pour cent en poids d'un (co)monomère contenant de l'azote, sur la base du poids total du deuxième matériau (co)polymérisable.

10. Ensemble adhésif sensible à la pression multicouche selon l'une quelconque des revendications précédentes, dans lequel le premier et/ou le deuxième matériau polymère est obtenu par polymérisation par rayonnement actinique.

11. Ensemble adhésif sensible à la pression multicouche selon l'une quelconque des revendications précédentes, dans lequel la première couche PSA a une épaisseur d'au moins 800 µm.

12. Ensemble adhésif sensible à la pression multicouche selon l'une quelconque des revendications précédentes, dans lequel la deuxième couche PSA a une épaisseur d'au moins 10 µm.

13. Ensemble adhésif sensible à la pression multicouche selon l'une quelconque des revendications précédentes, qui a une valeur de résistance au cisaillement statique supérieure à 200 min lorsqu'elle est mesurée à 70 °C selon la méthode de test de cisaillement statique décrite dans la section expérimentale.

14. Procédé de fabrication d'un ensemble adhésif sensible à la pression (PSA) multicouche selon l'une quelconque des revendications précédentes, comprenant les étapes consistant à :
a) fournir une pluralité de couches d'adhésif sensibles à la pression (PSA), dans lequel la pluralité de couches PSA comprend au moins une première couche PSA comprenant un premier matériau polymère comprenant le produit de réaction d'un premier matériau (co)polymérisable comprenant un (co)monomère contenant un groupe carboxyle, et au moins une deuxième couche PSA comprenant un deuxième matériau polymère comprenant le produit de réaction d'un deuxième matériau (co)polymérisable comprenant un (co)monomère contenant de l'azote, et dans lequel l'ensemble adhésif sensible à la pression multicouche comprend au moins deux couches PSA possédant une épaisseur d'au moins 800 µm ; et
b) superposer la pluralité de couches PSA par des techniques de stratification selon un agencement tel que la/les premières couche(s) PSA et la/les deuxièmes couche(s) PSA sont superposées de manière adjacente selon une série strictement alternée.
